# EUROPEAN PATENT APPLICATION

(11) **EP 4 847 809 A1**
(43) Date of publication of application: **02.12.2026**
(21) Application number: 26179527.2
(22) Date of filing: 19.05.2026
(51) Int. Cl.: F16K 11/20, F16K 11/00, F16K 27/06, F24D 19/00, E03B 7/04, E03C 1/02, F24D 19/10

(54) **BYPASS VALVE DEVICE AND RESPECTIVE HYDRAULIC SYSTEM**

(30) Priority: 30.05.2025 IT 202500012730
(71) Applicant: CIMBERIO HOLDING S.r.l., 20145 Milano (IT)
(72) Inventor: CIMBERIO, Roberto, 28010 Ameno Fraz. Vacciago (NO) (IT); GUIDETTI, Tiziano, 28021 Borgomanero (NO) (IT); CHIARELLO, Andrea, 28040 Oleggio Castello (NO) (IT)
(74) Representative: PGA S.p.A.

(57) **Abstract**

The present invention relates to a bypass valve device (1) comprising a supply conduit (2) configured to supply a fluid to a user (4), a return conduit (3) configured to receive said fluid from the user (4), a vent channel (6) connected to the return conduit (3), a return shutter (7) operating at the return conduit (3); the return shutter is switchable at least between: a first operating condition, in which it is arranged to allow the passage of fluid through the return conduit (3), and a second operating condition, in which it is arranged to prevent the passage of fluid through the return conduit (3) and allow the passage of fluid from the user (4) to the vent channel (6). The invention also relates to a method of use of the device (1).

## Description

### Background of the invention

The invention relates to the field of fluid valves and, in detail, concerns a bypass valve device and a hydraulic system comprising such a valve device.

### Prior art

The use of bypass valves in hydraulic systems, for example air-conditioning systems, is known for opening and closing the fluid connection between a fluid distribution network and a user or terminal unit.

With exemplary reference to the air-conditioning sector, bypass valves are generally coupled to respective fan coil units in order to interrupt the delivery of fluid to the latter, for the purpose of carrying out maintenance and installation operations or simply to exclude one or more fan coil units from the air-conditioning system.

In particular, the known valves comprise a delivery duct and a return duct connected to the user in order to allow fluid circulation within the user.

A bypass channel is interposed between the delivery duct and the return duct in order to place the two ducts in fluid communication and allow the passage of fluid from the delivery duct to the return duct while excluding the user connected to the valve. In particular, the known valves have one or more shutters for interrupting or allowing the passage of fluid from/to the user and through the bypass channel. However, the known valves, such as for example the one shown in document GB2407144, are not capable of facilitating the removal of air or other gases from the fluid circulating within the circuit and in particular flowing through the user, thereby making the installation and maintenance operations of the users associated with the hydraulic circuits less convenient.

### Objects of the invention

In light of the above discussion, an object of the invention is to provide a bypass valve device and a hydraulic system that facilitate the installation and maintenance operations of a user connected to the bypass valve.

It is also an object of the present invention to provide a bypass valve device and a hydraulic system that allow easy removal of air.

A further object of the present invention is to provide a bypass valve device and a system that make it possible to facilitate the assembly or installation of a user to a fluid distribution network.

It is also an object of the present invention to provide a bypass valve device that is structurally simple and compact in size.

### Summary

One or more of the above-mentioned objects are substantially achieved by the bypass valve device and the hydraulic system according to any one of the appended claims.

Further aspects of the invention will be described below.

A 1^{st} aspect concerns a bypass valve device that comprises:
a supply conduit configured to supply a fluid to a user,
a return conduit configured to receive said fluid from the user,
a vent channel connected to the return conduit,
a return shutter operating at the return conduit and switchable at least between:
   a first operating condition, in which it is arranged to allow fluid passage through the return conduit,
   a second operating condition, in which it is arranged to block fluid passage through the return conduit and allow fluid passage from the user to the vent channel.

In a 2^{nd} aspect according to the preceding aspect, the bypass valve device comprises a bypass channel connected to the supply conduit and to the return conduit to place them in fluid communication with each other.

In a 3^{rd} aspect according to the preceding aspect, the bypass channel extends transversely to the supply conduit and/or to the return conduit, preferably the bypass channel extends perpendicularly to the supply conduit and/or to the return conduit. In a 4^{th} aspect according to any one of the two preceding aspects, the bypass valve device comprises a bypass shutter arranged at said bypass channel and switchable at least between an open operating condition, in which it allows fluid passage from the supply conduit to the return conduit, and a closed operating condition, in which it is arranged to block fluid communication between said conduits.

In a 5^{th} aspect according to any one of the three preceding aspects, the return conduit extends between a fluid receiving terminal, configured to be connected to the user, and an outlet mouth, and wherein the vent channel is connected to a section of the return conduit extending between the fluid receiving terminal and the bypass channel.

In a 6^{th} aspect according to any one of the preceding aspects, the vent channel is configured to be positioned in use proximally to the user.

In a 7^{th} aspect according to any one of the preceding aspects, the vent channel extends transversely to the return conduit.

In a 7^{th} bis aspect according to any one of the preceding aspects, the vent channel has an end connected to the return conduit at the return shutter.

In a 7^{th} ter according to the preceding aspect, the return shutter is arranged at the portion of the return conduit from which the vent channel extends.

In an 8^{th} aspect according to any one of the preceding aspects, the vent channel extends away from the return conduit being arranged alternatively either towards the supply conduit or away from the supply conduit.

In a 9^{th} aspect according to any one of the preceding aspects, the vent channel is arranged perpendicularly to the return conduit.

In a 10^{th} aspect according to any one of the preceding aspects, in the first operating condition, the return shutter is arranged to allow fluid passage through the return conduit and to block fluid passage from the user to the vent channel.

In a 11^{th} aspect according to any one of the preceding aspects from the 1^{st} to the 9^{th}, in the first operating condition, the return shutter is arranged to allow fluid passage through the return conduit and to allow fluid passage from the user to the vent channel.

In a 12^{th} aspect according to any one of the preceding aspects, the return shutter is a ball shutter, preferably a three-way ball shutter.

In a 13^{th} aspect according to any one of the preceding aspects, the bypass valve device comprises a supply shutter operating at the supply conduit and switchable between:
an open operating condition, in which it is arranged to allow fluid passage through the supply conduit, in particular allowing in use the supply of fluid to the user, and
a closed operating condition, in which it is arranged to block fluid passage through the supply conduit, in particular preventing in use the supply of fluid to the user.

In a 14^{th} aspect according to the preceding aspect, the supply shutter is a ball shutter.

In a 15^{th} aspect according to any one of the two preceding aspects, the supply conduit extends between a fluid inlet port and a fluid supply terminal configured to be connected to said user.

In a 16^{th} aspect according to the preceding aspect, said supply shutter is arranged in a section of the supply conduit extending between the fluid supply terminal and the bypass channel.

In a 17^{th} aspect according to any one of the four preceding aspects, said supply shutter is configured to be positioned in use proximally to the user.

In a 18^{th} aspect according to any one of the preceding aspects, the vent channel comprises a tubular collar projecting from the return conduit, and wherein a vent valve is engaged to the tubular collar, wherein said vent valve is switchable between an open state, in which it is arranged to allow fluid passage between the vent channel and an external environment, and a closed state, in which it is arranged to block fluid passage between the vent channel and the external environment.

In a 19^{th} aspect according to the preceding aspect, the vent valve comprises:
a tubular valve body having a first end engaged to the tubular collar, and a second end, opposite to the first end, wherein the tubular valve body defines an internal chamber and at least a venting orifice passing through a wall, optionally a lateral wall, of the tubular valve body, and
a control member fluid-tightly engaged at the second end of the tubular valve body and having a control portion, projecting from the tubular valve body and activatable by a user, and a closing portion, optionally connected to the control portion by a stem passing through the internal chamber of the tubular valve body.

In a 20^{th} aspect according to the preceding aspect, said closing portion is selectively configurable to operate as follows:
in the open state of the vent valve, to open the fluid passage through said vent channel and said first end of the tubular valve body, allowing venting through the venting orifice,
in the closed state of the vent valve, to prevent fluid passage through said vent channel and said first end of the tubular valve body, blocking venting through the venting orifice.

In a 21^{st} aspect according to any one of the preceding aspects, the return conduit defines at least partially a respective receiving seat configured to receive the return shutter.

In a 22^{nd} aspect according to any one of the preceding aspects when combined with at least the 13^{th} aspect, the supply conduit defines at least partially a respective receiving seat configured to receive the supply shutter.

In a 23^{rd} aspect according to any one of the preceding aspects when combined with at least the 4^{th} aspect, the bypass channel defines at least partially a respective receiving seat configured to receive the bypass shutter.

In a 24^{th} aspect according to any one of the preceding aspects when combined with at least the 4^{th} aspect and the 13^{th} aspect, the return conduit, the supply conduit and the bypass channel define at least partially respective receiving seats configured to receive respectively the return shutter, the supply shutter, and the bypass shutter.

In a 25^{th} aspect according to any one of the preceding aspects, the bypass valve device comprises a first insert connected, optionally removably, to the return conduit to at least partially define said fluid receiving terminal.

In a 26^{th} aspect according to the preceding aspect, the first insert is fixed to the return conduit.

In a 27^{th} aspect according to any one of the two preceding aspects when combined with the 21^{st} or 24^{th} aspect, the first insert is connected to the return conduit at at the respective seat to define said seat and to constrain the return shutter within it.

In a 28^{th} aspect according to any one of the three preceding aspects, the first insert is engageable with the return conduit to allow the insertion during assembly (and optionally the removal in the case of maintenance) of the return shutter into the respective seat.

In a 29^{th} aspect according to any one of the preceding aspects, the bypass valve device comprises a second insert connected, optionally removably, to the supply conduit to at least partially define said fluid supply terminal

In a 30^{th} aspect according to the preceding aspect, the second insert is fixed to the supply conduit.

In a 31^{st} aspect according to any one of the two preceding aspects when combined with the 22^{nd} or 24^{th} aspect, the second insert is connected to the supply conduit at the respective seat to define said seat and to constrain the supply shutter within it.

In a 32^{nd} aspect according to any one of the three preceding aspects, the second insert is engageable with the supply conduit to allow the insertion during assembly (and optionally the removal in the case of maintenance) of the supply shutter into the respective seat.

In a 33^{rd} aspect according to any one of the eight preceding aspects, the first insert and/or the second insert each have a connecting portion configured for removable coupling with the user, optionally wherein said connecting portion is threaded.

In a 34^{th} aspect according to any one of the preceding aspects when combined with the 23^{rd} or 24^{th} aspect, the bypass valve device comprises a third insert connected, optionally removably, to the bypass channel to define the respective seat and constrain the bypass shutter within it, the third insert being engageable to the bypass channel to allow insertion (and optionally removal) of the bypass shutter into/from the respective seat.

In a 35^{th} aspect according to the preceding aspect, the third aspect is fixed to the bypass channel.

In a 36^{th} aspect according to the 34^{th} or 35^{th} aspect, the bypass valve device comprises:
an access at the return conduit or the supply conduit associated with the bypass channel and configured to allow insertion (and optionally removal) of the third insert and thus of the bypass shutter into/from the respective seat,
a closing element engageable to said access to close it.

In a 37^{th} aspect according to any one of the preceding aspects, the supply conduit, the return conduit, the vent channel, and optionally the bypass channel, are manufactured as a single piece.

In a 38^{th} aspect according to any one of the preceding aspects, the bypass valve device comprises a main body couplable to one or more of said first insert, second insert, third insert, closing element; said main body defining at least partially said supply conduit, the return conduit, the vent channel, and optionally the bypass channel.

In a 39^{th} aspect according to any one of the preceding aspects, the bypass valve device comprises a first actuating member connected to the return shutter, wherein the first actuating member is adapted to move the return shutter between the first operating condition and the second operating condition.

In a 40^{th} aspect according to any one of the preceding aspects when combined with the 4^{th} aspect, the bypass valve device comprises a second actuating member connected to the bypass shutter, wherein the second actuating member is adapted to move the bypass shutter between the respective open operating condition and the respective closed operating condition.

In a 41^{st} aspect according to any one of the preceding aspects when combined with the 13^{th} aspect, the bypass valve device comprises a third actuating member connected to the supply shutter, wherein the third actuating member is adapted to move the supply shutter between the respective open operating condition and the respective closed operating condition.

In a 42^{nd} aspect according to any one of the three preceding aspects, each actuating member has a respective handle graspable by the user for moving the respective shutter between the respective operating conditions.

In a 43^{rd} aspect according to the preceding aspect, the handle of each actuating member is rotatable between at least two positions angled at 90° to each other about a respective rotation axis, wherein each handle position is associated with a respective operating condition of the respective shutter.

In a 44^{th} aspect according to any one of the preceding aspects, the bypass valve device comprises one or more access portions, each protruding from a respective conduit and couplable to a pressure gauge so as to allow the measurement of pressure inside the same conduit or differential pressure.

In a 45^{th} aspect according to any one of the preceding aspects, the bypass valve device has different usage conditions and is switchable therebetween, said usage conditions comprising one or more among a flow blocking condition, a bypass condition, a venting condition and an operating condition.

In a 46^{th} aspect according to the preceding aspect when combined with the 2^{nd} aspect, the bypass valve device has a flow blocking condition, wherein the passage of fluid through the supply conduit, the return conduit and the bypass channel is prevented.

In a 47^{th} aspect according to the preceding aspect when combined with the 4th and 13th aspects, in the flow blocking condition of the valve device:
- the supply shutter is placed in the closed operating condition,
- the bypass shutter is placed in the closed operating condition,
- the return shutter is placed in the second operating condition.

In a 48^{th} aspect according to the 45th aspect when combined with the 2nd aspect, the bypass valve device has a bypass condition, wherein the passage of fluid through the supply conduit and the return conduit is prevented and the passage of fluid through the bypass channel is allowed.

In a 49^{th} aspect according to the preceding aspect when combined with the 4th and 13th aspects, in the bypass condition of the valve device:
- the supply shutter is placed in the closed operating condition,
- the bypass shutter is placed in the open operating condition,
- the return shutter is placed in the second operating condition.

In a 50^{th} aspect according to the 45th aspect when combined with the 2nd aspect, the bypass valve device has a venting condition, wherein the passage of fluid through the supply conduit and the passage of fluid from the user to the vent channel are allowed and wherein the passage of fluid through the bypass channel is prevented.

In a 51^{st} aspect according to the preceding aspect when combined with the 4th and 13th aspects, in the venting condition of the valve device:
- the supply shutter is placed in the open operating condition,
- the bypass shutter is placed in the closed operating condition,
- the return shutter is placed in the second operating condition.

In a 52^{nd} aspect according to the 45th aspect when combined with the 2nd aspect, the bypass valve device has an operating condition, wherein the passage of fluid through the supply conduit and the return conduit is allowed and wherein the passage of fluid through the bypass channel is prevented.

In a 53^{rd} aspect according to the preceding aspect when combined with the 4th and 13th aspects, in the operating condition of the valve device:
- the supply shutter is placed in the open operating condition,
- the bypass shutter is placed in the closed operating condition,
- the return shutter is placed in the first operating condition.

In a 54^{th} aspect according to any one of the preceding aspects, the return shutter comprises at least a first and a second channel adapted to allow fluid communication, in particular gas passage, between the vent channel and the return conduit.

In a 55^{th} aspect according to the preceding aspect, the first channel and the second channel are in fluid communication with each other, the channels of the return shutter being configured to place one end of the vent channel and a fluid receiving terminal of the return conduit in communication with each other.

In a 56^{th} aspect according to any one of the two preceding aspects, the positioning of the channels of the return shutter with respect to the return conduit and with respect to the vent channel varies according to the positioning of the return shutter, in particular varies according to the operating condition of the shutter.

In a 57^{th} aspect according to any one of the three preceding aspects, the relative positioning between the channels of the return shutter is fixed, in particular does not vary according to the positioning of the return shutter,
optionally the second channel is arranged substantially in an intermediate position along the length of the first channel.

In a 58^{th} aspect according to any one of the four preceding aspects, the first channel extends transversely to the second channel; in particular, the first channel is arranged orthogonally with respect to the second channel.

In a 59^{th} aspect according to any one of aspects from the 54^{th} to the 58^{th}, the return shutter comprises an element rotatable about an axis defining two mutually transverse channels, wherein said two channels of the return shutter are configured to be arranged in fluid communication with the vent channel, the return duct and the user,
optionally wherein the return shutter comprises an element rotatable about an axis defining said channels of the shutter, said channels being through channels transverse to each other, wherein said through channels of the return shutter are configured to be arranged in fluid communication with the vent channel, the return conduit and the user in the different operating conditions of the return shutter itself. In a 60^{th} aspect according to the preceding aspect, the rotatable element is an element having at least one surface of revolution, or a spherical element or a quasi-spherical element or a cylindrical element or an ovoid element, preferably it is a three-way ball shutter.

In a 61^{st} aspect according to the preceding aspect, the first channel extends between two openings and the second channel has a respective opening 72, said openings of the first and second channels being configured to allow the passage of fluid, optionally wherein the openings of the first channel and the opening of the second channel are made on the outer surface of the rotatable element, preferably said openings are openings of the sphere of said ball shutter.

In a 62^{nd} aspect according to any one of aspects 54th to 61st, the return shutter is configured to arrange the first channel aligned with the return conduit and the second channel transversely to the return conduit in the first operating condition; and/or wherein in the first operating condition, the first channel is configured to allow the passage of fluid from the terminal of the return conduit towards both the outlet mouth of the return conduit and towards the second channel; the latter is in turn configured to allow the passage of fluid towards the vent channel.

In a 63^{rd} aspect according to the preceding aspect when combined with aspect 59^{th}, in the first operating condition the return shutter is configured to prevent the passage of fluid between the outlet mouth of the return conduit and each of the interspace, the vent channel and the terminal of the return conduit and to arrange:
- one of the openings of the first channel facing the terminal of the return conduit and the other opening facing the outlet mouth,
- the opening of the second channel facing an interspace defined between the rotatable element and the return conduit.

In a 64^{th} aspect according to any one of aspects 54^{th} to 61^{st}, the return shutter, in the second operating condition, is configured to arrange the second channel aligned with the return conduit and the first channel transversely, in particular orthogonally, to the same return conduit; and/or wherein the second channel is configured to allow the passage of fluid from the terminal towards the vent channel through the first channel in the second operating condition.

In a 65^{th} aspect according to the preceding aspect when combined with aspect 59^{th} in the second operating condition the return shutter is configured to arrange:
- the opening of the second channel facing the terminal of the return conduit, and
- one of the openings of the first channel facing the end of the vent channel and the other opening facing an interspace defined between the rotatable element and the return conduit.

A 66^{th} aspect concerns a hydraulic system comprising:
at least one supply line of a fluid,
at least one return line of said fluid,
a bypass valve device according to any one of the preceding aspects, wherein the supply line is connected upstream of the supply conduit of the bypass valve device and wherein the return line is connected downstream of the return conduit of the bypass valve device,
a user, preferably a heat exchanger, comprising an inlet and an outlet in fluid communication with each other, said inlet being connected downstream of the supply conduit of said bypass valve device to receive said fluid, said outlet being connected upstream of the return conduit of said bypass valve device to send to the same bypass valve device the fluid exiting from the user.

In a 67^{th} aspect according to the preceding aspect, the hydraulic system comprises a plurality of bypass valve devices and a plurality of users, wherein each bypass valve device is associated and connected to a respective user.

In a 68^{th} aspect according to the preceding aspect, at least two users of said plurality of users are arranged in parallel with each other.

In a 69^{th} aspect according to any one of the three preceding aspects, the hydraulic system comprises pumping means in fluid communication with the supply line and the return line, wherein the pumping means are arranged downstream of the return line and upstream of the supply line, and wherein the pumping means are adapted to receive fluid from one or more users through the return line and supply fluid to said users through the supply line.

In a 70^{th} aspect according to any one of the four preceding aspects, the hydraulic system comprises a heater arranged upstream of the supply line, optionally downstream of the pumping means.

In a 71^{st} aspect according to the preceding aspect, the heater is configured to receive fluid from the return line at a temperature and supply the fluid at a higher temperature to the supply line.

A 72^{nd} aspect concerns a method of using the bypass valve device according to any one of preceding aspects from the 1^{st} to the 65^{th} in a fluid distribution system, the method comprising the steps of:
- placing said bypass valve device in a bypass condition, in which fluid passage through the supply conduit and the return conduit is blocked and allowed through the bypass channel, or in a flow blocking condition, in which fluid passage through the supply conduit, the return conduit, and the bypass channel is blocked,
- connecting a supply line and a return line of said fluid distribution system respectively upstream of the supply conduit and downstream of the return conduit of the bypass valve device,
- providing a user comprising an inlet and an outlet in fluid communication with each other,
- connecting the user to the valve device by connecting the inlet of the user downstream of the supply conduit and the outlet of the user upstream of the return conduit,
wherein the step of connecting the user to the valve device is carried out when the bypass valve device is in the bypass condition or in the flow blocking condition.

In a 73^{rd} aspect according to the preceding aspect, the step of connecting the user to the valve device comprises connecting the inlet of the user to the supply terminal of the supply conduit, directly or with the interposition of a tubular element optionally flexible, and connecting the outlet of the user to the fluid receiving terminal of the return conduit, directly or with the interposition of a tubular element optionally flexible.

In a 74^{th} aspect according to the preceding aspect, the step of connecting the inlet of the user to the supply terminal comprises screwing the supply terminal to the user.

In a 75^{th} aspect according to any one of the two preceding aspects, the step of connecting the outlet of the user to the fluid receiving terminal comprises screwing the receiving terminal to the user.

In a 76^{th} aspect according to any one of aspects 72^{nd} to 75^{th}, the step of placing the bypass valve device in the flow blocking condition comprises the steps of:
- placing the supply shutter in the closed operating condition,
- placing the bypass shutter in the closed operating condition,
- placing the return shutter in the second operating condition.

In a 77^{th} aspect according to any one of aspects 72^{nd} to 76^{th}, the step of placing the bypass valve device in the bypass condition comprises the steps of:
- placing the supply shutter in the closed operating condition,
- placing the bypass shutter in the open operating condition,
- placing the return shutter in the second operating condition.

In a 78^{th} aspect according to any one of aspects 72^{nd} to 77^{th}, the method comprises the steps of:
- placing the bypass valve device in a venting condition, in which fluid passage through the supply conduit and fluid passage from the user to the vent channel are allowed,
- supplying fluid to the user through the supply conduit.

In a 79^{th} aspect according to the preceding aspect, the step of placing the bypass valve device in the venting condition comprises the steps of:
- placing the supply shutter in the open operating condition,
- placing the bypass shutter in the closed operating condition.

In an 80^{th} aspect according to any one of the two preceding aspects, the step of placing the bypass valve device in the venting condition comprises the step of placing the return shutter in the second operating condition so as to allow air removal through said vent channel.

In a 81^{st} aspect according to any one of the preceding aspects from the 72^{nd} to the 80^{th}, the method comprises the steps of:
- placing the bypass valve device in an operating condition, in which fluid passage through the supply conduit and the return conduit is allowed
- receiving fluid from the user and supplying said fluid to the return line through the return conduit.

In a 82^{nd} aspect according to the preceding aspect, the step of placing the bypass valve device in the operating condition comprises the steps of:
- placing the supply shutter in the open operating condition,
- placing the bypass shutter in the closed operating condition.

In an 83^{rd} aspect according to any one of the two preceding aspects, the step of placing the bypass valve device in the operating condition comprises the step of placing the return shutter in the first operating condition.

In an 84^{th} aspect according to any one of the preceding aspects from the 72^{nd} to the 83^{rd} when combined with one or more of aspects 76^{th}, 77^{th}, 80^{th}, 83^{rd}, the step of placing the return shutter in the first operating condition or in the second operating condition comprises acting on the respective first actuating member.

In an 85^{th} aspect according to any one of the preceding aspects from the 72^{nd} to the 84^{th} when combined with one or more of aspects 76^{th} 77^{th}, 80^{th}, 83^{rd}, the step of placing the return shutter in the first operating condition or in the second operating condition comprises rotating the handle connected to the return shutter.

In an 86^{th} aspect according to any one of the preceding aspects from the 72^{nd} to the 85^{th} when combined with one or more of aspects 76^{th} 77^{th}, 80^{th}, 82^{nd}, the step of placing the bypass shutter in the respective open operating condition or in the respective closed operating condition comprises acting on the respective second actuating member.

In an 87^{th} aspect according to any one of the preceding aspects from the 72^{nd} to the 86^{th} when combined with one or more of aspects 76^{th}, 77^{th}, 80^{th}, 82^{nd}, the step of placing the bypass shutter in the open operating condition or in the closed operating condition comprises rotating the handle of the second actuating member connected to the bypass shutter.

In an 88^{th} aspect according to any one of the preceding aspects from the 72^{nd} to the 87^{th} when combined with one or more of aspects 76^{th}, 77^{th}, 80^{th}, 82^{nd}, the step of placing the supply shutter in the respective open operating condition or in the respective closed operating condition comprises acting on the respective actuating member.

In an 89^{th} aspect according to any one of the preceding aspects from the 72^{nd} to the 88^{th} when combined with one or more of aspects 76^{th} 77^{th}, 80^{th}, 82^{nd}, the step of placing the supply shutter in the respective open operating condition or in the respective closed operating condition comprises rotating the handle of the third actuating member connected to the supply shutter.

### Description of the figures

Further features and advantages of the invention will be further described with reference to the attached figures, in which:
- figure 1 shows a perspective view of the by-pass valve device according to an embodiment in accordance with the present invention,
- figures 2-4 each illustrate a sectional view of the by-pass valve device of figure 1 in respective usage conditions according to the present invention,
- figure 5 illustrates a perspective view of the by-pass valve device according to a further embodiment in accordance with the present invention,
- figure 6 shows a sectional view of the by-pass valve device of figure 5,
- figure 7 shows a block diagram of a portion of a hydraulic system in accordance with the present invention.

### Detailed description of the invention

With reference to said figures, the bypass valve device of the present invention is globally identified by 1. In particular, the bypass valve device 1 can be used in heating, air-conditioning, water and sanitary systems, as well as in other types of systems for distributing a working liquid (water or other) to one or more users. The bypass valve device 1 comprises a supply conduit 2 configured to supply a fluid to a user 4 and a return conduit 3 configured to receive the fluid from the user 4. The supply conduit 2 and the return conduit 3 are also configured respectively to receive and deliver fluid from a fluid distribution network having a supply line 101 and a return line 102. In particular, the fluid may be a heated or cooled fluid such as, for example, water.

The user 4 may be defined by a terminal unit, for example of a heating or air-conditioning system. In such case, the user 4 may be a heat exchanger, such as a fan coil unit or fan coil. It is not excluded that the terminal unit may be associated with systems of another type and have a structure different from that of a fan coil. The user 4 has an inlet 4a and an outlet 4b placed in fluid communication with each other. The bypass valve device 1 is connectable to the inlet 4a and the outlet 4b of the user 4 respectively to send and receive the fluid to/from the user 4. In other words, the user 4 is placed in fluid communication with the fluid distribution network through the bypass valve device 1.

The valve device 1 comprises a vent channel 6 connected to the return conduit 3. In detail, the vent channel 6 may be placed in fluid communication with a portion of the return conduit 3.

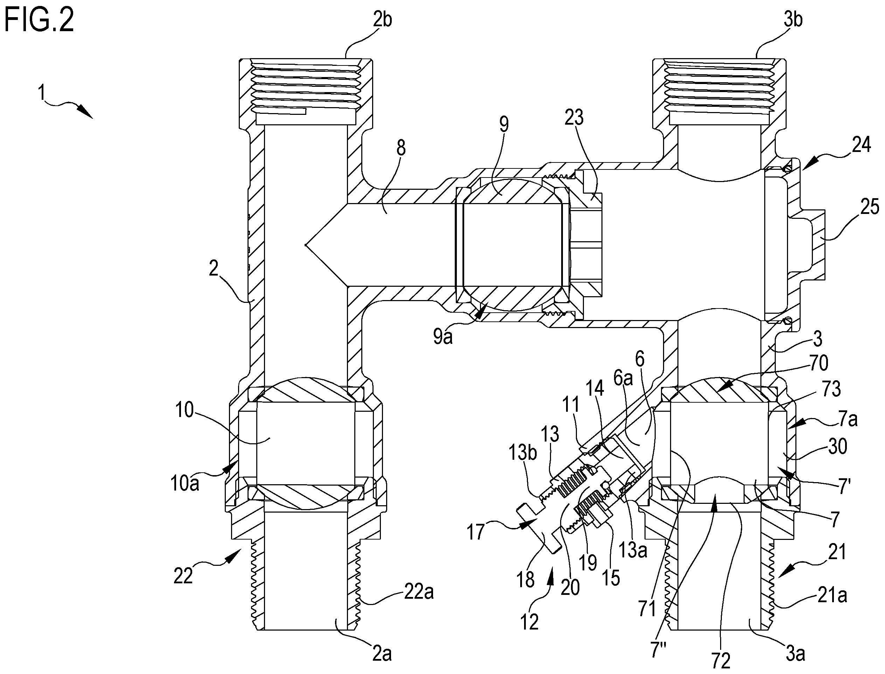

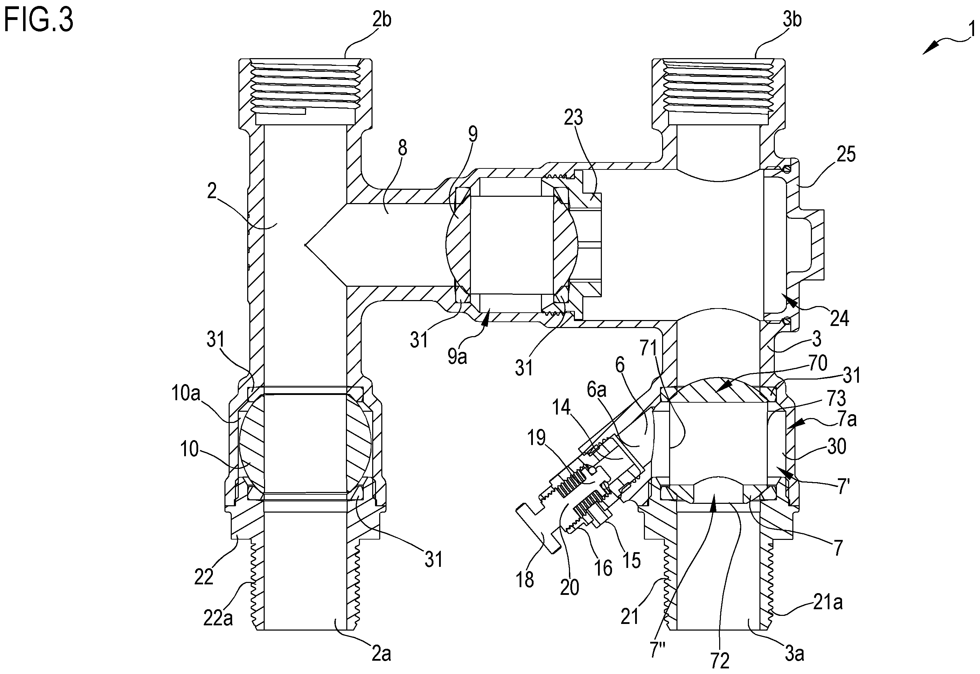

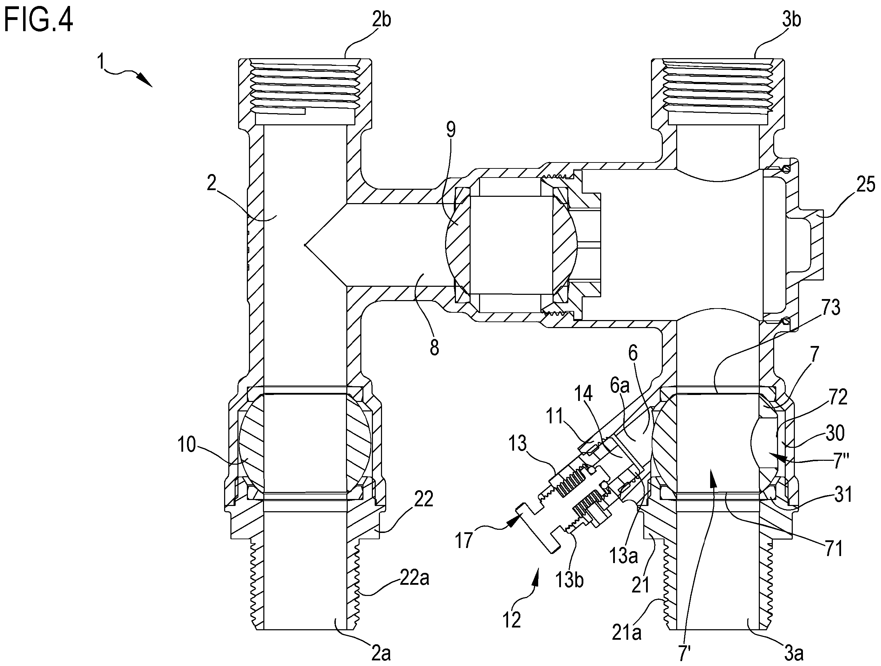

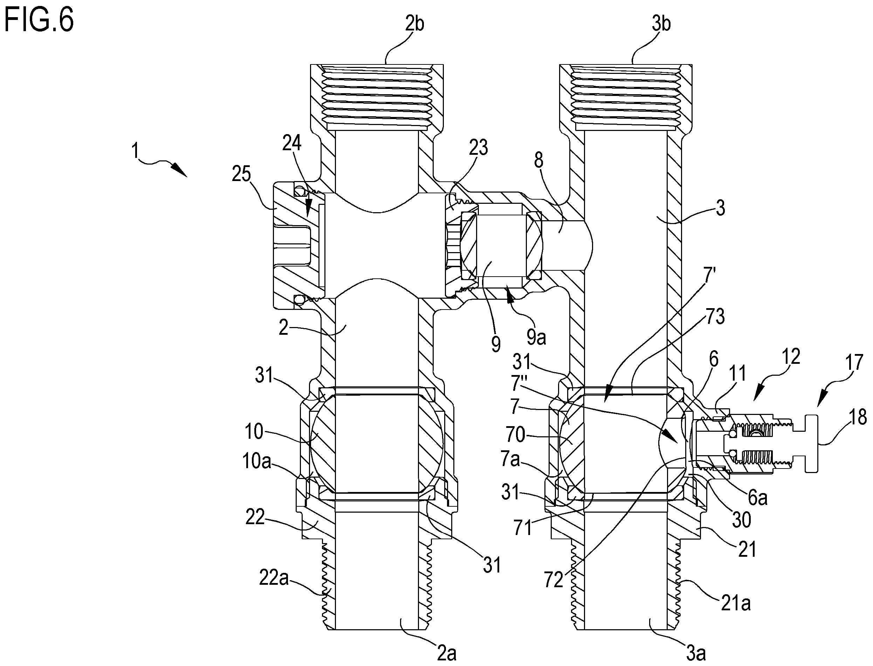

Furthermore, the valve device 1 comprises a return shutter 7 operating at the return conduit 3. Said return shutter 7 is switchable at least between a first operating condition and a second operating condition. The return shutter 7 is illustrated arranged in the first operating condition in the sectional views of figures 4 and 6 and illustrated arranged in the second operating condition in the sectional views of figures 2 and 3.

In the first operating condition, the return shutter 7 is arranged to allow the passage of fluid through the return conduit 3. In the second operating condition, the return shutter 7 is arranged to prevent the passage of fluid through the return conduit 3. In particular, in the second operating condition, the return shutter is also arranged to allow the passage of fluid from the user 4 to the vent channel 6.

The vent channel 6 allows the removal of air from the return conduit 3, in particular from the terminal 3a. In fact, the vent channel 6 is configured to place the return conduit 3 and/or the user 4 in fluid communication with an external environment surrounding the device at least when the return shutter 7 is in the second operating condition.

According to an aspect, in the first operating condition, the return shutter 7 of the embodiments illustrated herein is arranged and configured to allow the passage of fluid from the user 4 to the vent channel 6. In other words, the user 4 is in fluid communication with the vent channel 6 and with the return line 102 when the return shutter 7 is in the first operating condition.

However, it is not excluded that in the first operating condition the return shutter 7 may be arranged to prevent the passage of fluid from the user 4 to the vent channel 6. In other words, the return shutter 7 may be configured to place the user 4 in fluid communication only with the return line 102 through the return conduit 3 and isolate the user 4 and the vent channel 6 from each other when it is arranged in the first operating condition.

Furthermore, it is not excluded that the return shutter 7 may have a third operating condition (not illustrated), in which it is arranged to prevent the passage of fluid from the user 4 to the return conduit 3 and to the vent channel 6. In said third operating condition, the return shutter 7 may be configured to allow the passage of fluid between the return conduit 3 and the vent channel 6 while isolating the user 4. In other words, the user 4 may be isolated from the return conduit 3 and from the vent channel 6 when the return shutter 7 is in the third operating condition. In the third operating condition, the return shutter 3 may be configured to allow the passage of fluid between the vent channel 6 and the supply line 101 and/or the return line 102. In detail, the return shutter 7 comprises at least a first and a second channel 7' and 7" adapted to allow fluid communication, and therefore the passage of gas such as air, between the vent channel 6 and the return conduit 3. In particular, the first and the second channel 7' and 7" are in fluid communication with each other. Said channels are also configured to place the end 6a of the vent channel 6 and the terminal 3a of the return conduit 3 in communication with each other.

The positioning of the first and the second channel 7' and 7" of the return shutter 7 with respect to the return conduit 3 and the vent channel 6 varies according to the positioning of the return shutter 7 and, therefore, according to the operating condition in which the shutter 7 is located. The relative positioning between the first and second channel 7' and 7" is instead fixed and does not vary according to the positioning of the return shutter 7.

The first channel 7' extends transversely to the second channel 7'; in particular, it may be arranged orthogonally with respect to the second channel 72. In particular, the second channel 7" is arranged substantially in an intermediate position along the length of the first channel 7'.

In an embodiment, the return shutter 7 comprises a rotatable element 70 about an axis (for example a spherical or quasi-spherical or cylindrical or ovoid element or in any case an element having at least one surface of revolution) defining the two through channels (first and second channel 7' and 7") transverse to each other, preferably orthogonal to each other. Said two through channels of the return shutter 7 are configured to be arranged in fluid communication with the vent channel 6, the return conduit 3 and the user 4 in the different operating conditions of the return shutter 7 itself.

In particular, the return shutter 7 is a ball shutter, preferably it is a three-way ball shutter.

The first channel 7' extends between two openings 71 and 73 and the second channel 7" has a respective opening 72. Said openings 71, 72 and 73 are configured to allow the passage of fluid. The openings 71 and 73 of the first channel 7' and the opening 72 of the second channel 7" are made on the outer surface of the rotatable element 70. In detail, the openings 71, 72 and 73 are openings of the sphere of said ball shutter.

In the first operating condition of the return shutter 7 (illustrated in figures 4 and 6), the first channel 7' is aligned with the return conduit 3 and the second channel 7" is arranged transversely, in particular orthogonally, to the return conduit 3. In other words, in the first operating condition, one of the openings 71 and 73 of the first channel 7' is arranged facing the terminal 3a of the return conduit 3 and the other opening is arranged facing the outlet mouth 3b. The opening 72 of the second channel 7" is arranged facing an interspace 30 defined between the rotatable element 70 and the return conduit 3.

In said first operating condition, the first channel 7' is configured to allow the passage of fluid from the terminal 3a both towards the outlet mouth 3b of the return conduit 3 and towards the second channel 7"; the latter is in turn configured to allow the passage of fluid towards the vent channel 6.

In the second operating condition of the return shutter 7 (illustrated in figures 2 and 3), the second channel 7" is arranged aligned with the return conduit 3 and the first channel 7' is arranged transversely, in particular orthogonally, to the same return conduit 3. In other words, in the second operating condition, the opening 72 of the second channel 7" faces the terminal 3a of the return conduit 3, and one of the openings 71 and 73 of the first channel 7' faces the end 6a of the vent channel 6 and the other faces the interspace 30 defined between the rotatable element 70 and the return conduit 3. In said second operating condition, the second channel 7" is configured to allow the passage of fluid from the terminal 3a towards the vent channel 6 through the first channel 7'. The passage of fluid between the outlet mouth and each of the interspace 30, the vent channel 6 and the terminal 3a is prevented in the second operating condition.

In an embodiment, the valve device 1 comprises a bypass channel 8 connected to the supply conduit 2 and to the return conduit 3 to place them in fluid communication with each other. In particular, the bypass channel 8 allows the supply line 101 and the return line 102 to be maintained in fluid communication with each other, for example, when the return shutter 7 is arranged in the second or third operating condition.

The valve device 1 further comprises a bypass shutter 9 arranged at said bypass channel 8. The bypass shutter 9 is switchable at least between a respective open operating condition and a respective closed operating condition. In the open operating condition (figure 2), the bypass shutter 9 allows the passage of fluid from the supply conduit 2 to the return conduit 3. In the closed operating condition (figures 3, 4 and 6), the bypass shutter 9 is arranged to prevent fluid communication through the bypass channel and therefore a direct communication between said conduits 2, 3. The bypass shutter also comprises a element rotatable about an axis (for example a spherical or quasi-spherical or cylindrical or ovoid element or in any case an element having at least one surface of revolution). In particular, the bypass shutter 9 is a ball shutter.

According to an aspect, the return conduit 3 extends between a fluid receiving terminal 3a and an outlet mouth 3b. The fluid receiving terminal 3a is, in particular, configured to be connected to the user 4 to receive fluid therefrom. In detail, the fluid receiving terminal 3a is configured to be connected to the outlet 4b of the user 4. The outlet mouth 3b is configured to be connected to the return line 102 of said fluid. The outlet mouth 3b therefore allows the fluid received from the user 4 to be sent to the return line 102 and therefore to the distribution network or hydraulic system in which the user 4 is inserted.

According to an aspect, the vent channel 6 is connected to a portion of the return conduit 3 extending between the fluid receiving terminal 3a and the bypass channel 8. In particular, the vent channel 6 is configured to be arranged in use in a position proximal to the user 4 and therefore closer to the same user 4 than the bypass channel.

In an embodiment, the vent channel 6 extends transversely to the return conduit 3. In particular, the vent channel 6 has an end 6a connected to the return conduit 3 at the return shutter 7. The return shutter 7 is therefore positioned along said portion of the return conduit 3 extending between the fluid receiving terminal 3a and the bypass channel 8.

Such configuration of the vent channel 6 and of the return shutter 7 advantageously allows the return shutter to act both on the fluid flow passing through the return conduit 3 and on the fluid flow passing through the vent channel 6. In this way, a single shutter or valve is capable of operating simultaneously both on the return conduit 3 and on the vent channel 6.

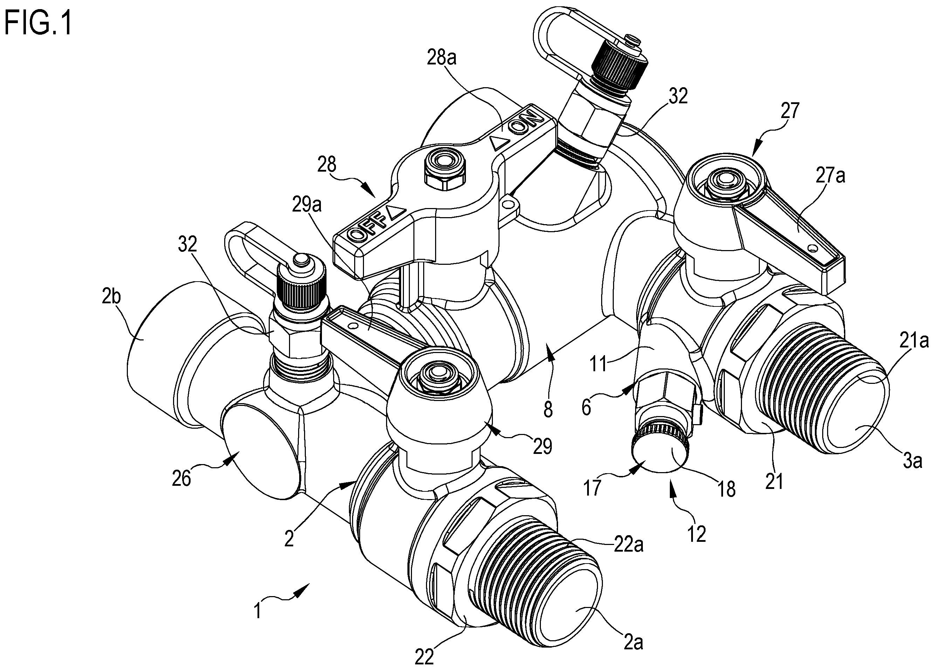

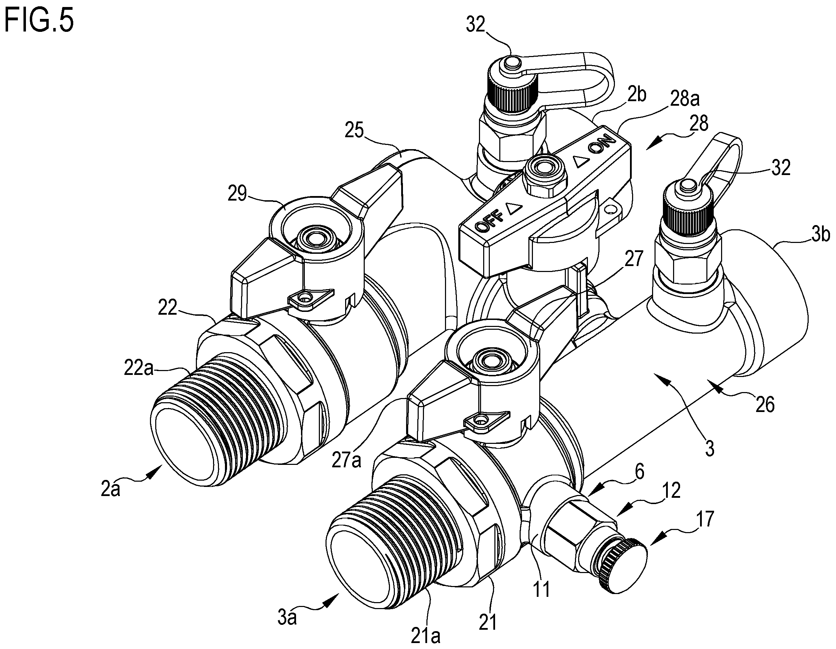

The vent channel 6 may extend away from the return conduit 3 alternatively being arranged either towards the supply conduit 2, as for example shown in figures 1-4, or away from the supply conduit 2, as shown in figures 5 and 6. In other words, the vent channel 6 may extend laterally to the return conduit 3 towards the supply conduit 2 or on the side opposite the supply conduit 2. In detail, the vent channel 6 may be arranged perpendicularly to the return conduit 3, as shown in figures 5 and 6, or inclined by an angle smaller than 90° with respect to the return conduit, as shown in figures 1-4.

In an embodiment, the bypass valve device 1 comprises a supply shutter 10 operating at the supply conduit 2. Said supply shutter 10 is switchable between a respective open operating condition and a respective closed operating condition. In the open operating condition, the supply shutter 10 is arranged to allow the passage of fluid through the supply conduit 2, in particular allowing in use the supply of fluid to the user 4. In detail, in the open operating condition (figures 3, 4 and 6), the supply shutter 10 allows fluid communication between the supply line 101 and the user 4 through the supply conduit 2. In the closed operating condition (figure 2), the supply shutter 10 is arranged to prevent the passage of fluid through the supply conduit 2, in particular preventing in use the supply of fluid to the user 4. The supply shutter 10 is of the ball type.

According to an aspect, the supply conduit 2 extends between a fluid inlet mouth 2b and a fluid supply terminal 2a. The fluid supply terminal 2a is configured to be connected to the user 4. In detail, the fluid supply terminal 2a is adapted for connection with the inlet 4a of the user 4. The fluid inlet mouth 2b is instead configured to be connected to a fluid supply line 101. The fluid inlet mouth 2b is adapted to receive the fluid from the supply line 101 of the network or system in which the user 4 is inserted.

The supply shutter 10 is, in particular, arranged in a portion of the supply conduit 2 extending between the fluid supply terminal 2a and the bypass channel 8. In particular, the supply shutter 10 is configured to be arranged in use in a position proximal to the user 4.

According to an aspect, the supply conduit 2 and the return conduit 3 extend parallel to each other. The supply and return conduits 2, 3 may have similar or completely identical dimensions. The supply conduit 2 may extend between the supply terminal 2a and the inlet mouth 2b for a length equal to the extension length of the return conduit 3 between the fluid receiving terminal 3a and the outlet mouth 3b.

In an embodiment, the supply conduit 2 and the return conduit 3 have an extension comprised between 120 millimetres and 150 millimetres, for example equal to about 137 millimetres.

In an embodiment, the supply conduit 2 and the return conduit 3 have an internal section with a diameter equal to 20 millimetres. However, it is not excluded that the internal section of the two conduits may have a diameter greater or smaller than 20 millimetres or that the two conduits may have a different extension, also different from each other or different interaxle spacing with respect to what is illustrated. According to an aspect, the bypass channel 8 extends between the supply conduit 2 and the return conduit 3. In particular, the bypass channel 8 extends transversely to the two conduits 2, 3, preferably orthogonally thereto. The bypass channel 8 may have an internal section having dimensions substantially equal to the dimensions of the internal section of the supply conduit 2 and/or of the return conduit 3.

In an embodiment, the bypass channel 8 has an internal section having a diameter equal to 20 millimetres. In a further embodiment, the bypass channel 8 has an internal section having a diameter equal to 12 millimetres.

In an embodiment, the vent channel 6 comprises a tubular collar 11 protruding from the return conduit 3. In particular, the valve device 1 comprises a vent valve 12 engaged with the tubular collar 11. Said vent valve 12 is switchable between an open state, in which it is arranged to allow the passage of fluid between the vent channel 6 and an external environment, and a closed state, in which it is arranged to prevent the passage of fluid between the vent channel 6 and the external environment.

According to an aspect, the vent valve 12 comprises a tubular valve body 13 and a control member 17.

The tubular valve body 13 has a first end 13a, engaged with the tubular collar 11, and a second end 13b, opposite the first end 13a. In particular, said tubular valve body 13 defines an internal chamber 14 and at least one vent orifice 15 crossing a wall 16 of the tubular valve body 13. In detail, the vent orifice 15 is made in a lateral wall of the tubular valve body 13.

The control member 17 is fluid-tightly engaged at the second end 13b of the tubular valve body 13. Said control member 17 has a control portion 18 and a closing portion 19. The control portion 18 protrudes with respect to the tubular valve body 13 and is activatable by a user. The closing portion 19 is connected to the control portion 18 by a stem 20 crossing the internal chamber 14 of the tubular valve body 13.

In detail, said closing portion 19 is selectively configurable to operate as follows:
in correspondence with the open state of the vent valve 12, open the passage of fluid through the vent channel 6 and the first end 13a of the valve body 13, allowing venting through the vent orifice 15,
in correspondence with said closed state of the vent valve 12, prevent the passage of fluid through the vent channel 6 and the first end 13a of the valve body 13, preventing venting through the vent orifice 15.

The control member 17 of the vent valve 12 is graspable by a user for moving the vent valve 12 between the open state and the closed state. In detail, the control member 17 is screwable and unscrewable from the tubular valve body 13, for example by a user. A user may act on the control member 17, screwing or unscrewing it with respect to the tubular valve body 13, switching the vent valve between the open state and the closed state.

According to an aspect, the return conduit 3, the supply conduit 2 and the bypass conduit 8 define at least in part respective receiving seats 7a, 9a, 10a. Said seats 7a, 9a, 10a are configured to receive respectively the return shutter 7, the bypass shutter 9 and the supply shutter 10. The vent channel 6 extends from the return conduit 3 at the receiving seat 7a of the return shutter 7.

In particular, the receiving seat 7a of the return shutter 7 and the return shutter 7 define an interspace 30 therebetween. Said interspace 30 is adapted to be in fluid communication with the user 4 and with the vent channel 6 and to allow the passage of fluid between the user 4 and said vent channel 6. In particular, the interspace 30 is in fluid communication with the vent channel 6 in the first operating condition and in the second operating condition of the return shutter 7.

In an embodiment, the bypass valve device 1 comprises a first insert 21 connected to the return conduit 3, optionally removably, to define the fluid receiving terminal 3a and a second insert 22 connected, optionally removably, to the supply conduit 2 to define the fluid supply terminal 2a. In detail, the first insert 21 and the second insert 22 are similar to each other.

In particular, the first insert 21 is connected to the return conduit 3 at the respective seat 7a to define said seat and constrain the return shutter 7 within the same. The first insert 21 is engageable with the return conduit 3 to allow the insertion during assembly (and optionally the removal in the event of maintenance) of the return shutter 7 into the respective seat 7a. The first insert 21 is configured to engage an access to the receiving seat 7a of the return shutter 7 through which said return shutter 7 is movable during assembly or possible maintenance. In particular, to arrange the return shutter 7 inside the respective seat 7a (or optionally remove the return shutter 7 already inserted in the seat) it is necessary for the first insert 21 not to be engaged with the return conduit 3 (proceeding with the insertion of the return shutter 7 and the engagement of the insert). In other words, during assembly or possible maintenance, the first insert 21 is connected to the return conduit 3 after the insertion of the return shutter 7 inside the respective seat 7a.

In an entirely similar manner, the second insert 22 is connected, optionally removably, to the supply conduit 2 at the respective seat 10a to define said seat and constrain the supply shutter 10 within the same. The second insert 22 is engageable with the supply conduit 2 to allow the insertion during assembly (and optionally the removal in the event of maintenance) of the supply shutter 10 into the respective seat 10a. The second insert 22 is configured to engage an access to the receiving seat 10a of the supply shutter 10 through which said shutter is movable during assembly or possible maintenance. In particular, to arrange the supply shutter 10 inside the respective seat (or optionally remove the supply shutter 10 already inserted in the seat) it is necessary for the second insert 22 not to be engaged with the supply conduit 2. In other words, during assembly or possible maintenance, the second insert 22 is connected to the supply conduit 2 after the insertion of the supply shutter 10 inside the respective seat 10a.

In an embodiment, the first insert 21 and the second insert 22 are fixed respectively to the return conduit 3 and to the supply conduit 2 and are non-removable.

In an embodiment, the first insert 21 and the second insert 22 each have a connection portion 21a, 22a configured for removable coupling with the user 4. Each connection portion 21a, 22a may be threaded. In particular, the connection portion 22a of the second insert 22 is configured for connection with the inlet of the user 4. The connection portion 21a of the first insert 21 is configured for connection with the outlet of the user 4.

According to an aspect, the first insert 21 and the second insert 22 each comprise a sealing element adapted to prevent the passage of fluid between the inserts 21, 22 and the conduits 2, 3.

In an embodiment, the valve device 1 comprises a third insert 23 connected, optionally removably, to the bypass channel 8 to define the respective seat 9a and constrain the bypass shutter 9 within the same. The third insert 23 is engageable with the bypass conduit 8 to allow the insertion during assembly (and optionally the removal in the event of maintenance) of the bypass shutter 9 into the respective seat 9a. The third insert 23 is configured to engage an access to the respective receiving seat 9a of the bypass shutter 9 through which said bypass shutter 9 is movable during assembly or possible maintenance. In particular, to arrange the bypass shutter 9 inside the respective seat 9a (or optionally remove the bypass shutter 9 already inserted in the seat) it is necessary for the third insert 23 not to be engaged with the bypass channel 8 (proceeding with the insertion of the shutter and the engagement of the insert). In other words, during assembly or possible maintenance, the third insert 23 is connected to the bypass channel 8 after the insertion of the bypass shutter into the respective seat 9a.

In an embodiment, the third insert 23 is fixed to the bypass channel 8 and is non-removable.

According to an aspect, the valve device 1 has an access 24 at the return conduit 3 or the supply conduit 2 associated with the bypass channel 8. In the example illustrated in figures 1-4, the access 24 is made in the return conduit 3. In the example illustrated in figures 5 and 6, the access 24 is made in the supply conduit 2. Said access 24 is adapted to allow the insertion during assembly (and optionally the removal in the event of maintenance) of the third insert 23 and therefore of the bypass shutter 9 into the respective seat 9a.

The valve device 1 comprises a closing element 25 engageable with the access 24 to occlude the same. Said closing element 25 has a gasket adapted to prevent, in use, fluid leakage at the access 24.

One or more among the bypass channel 8, the bypass shutter 9, the third insert 23, the access 24 and the closing element 25 may be in accordance with European patent publication EP2085670A1 or with Italian patent publication 102008901595015, the contents of which are incorporated herein.

In an embodiment, the supply conduit 2, the return conduit 3, the vent channel 6 and the bypass channel 8 are made in one piece. In particular, the supply conduit 2, the return conduit 3, the vent channel 6 and the bypass channel 8 are made in a single body which also defines the receiving seats 7a, 9a, 10a of the shutters. The valve device 1 may comprise a main body 26 coupleable to one or more among the first insert 21, the second insert 22, the third insert 23, and the closing element 25. Said main body 26 defines the supply conduit 2, the return conduit 3, the vent channel 6 and the bypass channel 8. The main body 26 also defines each of the receiving seats of the shutters.

According to an aspect, the bypass valve device 1 may comprise one or more sealing elements 31 arranged in each receiving seat of the shutters. Said sealing elements 31 are in particular two axially spaced elements interposed between each shutter and the respective receiving seat. Each shutter is movable with respect to the sealing element 31. Each sealing element 31 has a substantially annular conformation.

In an embodiment, the bypass valve device 1 comprises one or more among:
- a first actuating member 27 connected to the return shutter 7,
- a second actuating member 28 connected to the bypass shutter 9,
- a third actuating member 29 connected to the supply shutter 10.

Each actuating member 27, 28, 29 is adapted to move the respective shutter into the respective operating conditions.

In particular, each actuating member 27, 28, 29 has a respective handle 27a, 28a, 29a graspable by the user for moving the respective shutter between the operating conditions. In detail, the handle of each actuating member 27, 28, 29 is rotatable between two positions angled at 90° to each other about a respective rotation axis. Each position of the handle 27a, 28a, 29a is associated with a respective operating condition of the respective shutter.

In the case in which the return shutter 7 is movable between three different operating conditions, the handle 27a of the respective actuating member 27 may have three different positions angled with respect to each other about the respective rotation axis, each associated with a respective one of said three operating conditions.

In an embodiment, the valve device 1 comprises one or more access portions 32, each protruding from a respective conduit and coupleable to a pressure gauge so as to allow the measurement of pressure inside the same conduit or differential pressure. In particular, the valve device 1 comprises an access portion 32 protruding from the supply conduit 2 and defining an access to said supply conduit 2 and an access portion 32 protruding from the return conduit 3 and defining an access to said conduit.

According to an aspect, the valve device 1 according to the present invention has different usage conditions and is switchable therebetween. A user may manually act on the bypass valve device 1 to modify its usage condition. In detail, by modifying the operating condition of each shutter, by means of the actuating members 27, 28, 29, the user modifies the usage condition of the valve device 1.

The bypass valve device has a flow blocking condition (or also zero-flow condition), in which the passage of fluid through the supply conduit 2, the return conduit 3 and the bypass channel 8 is prevented. In other words, in the flow blocking condition there is no passage of fluid through the bypass valve device.

In detail, in the flow blocking condition of the valve device 1:
- the supply shutter 10 is placed in the closed operating condition,
- the bypass shutter 9 is placed in the closed operating condition,
- the return shutter 7 is placed in the second operating condition.

The flow blocking condition is advantageously usable in cases in which it is desired not only to isolate the user 4 from the fluid distribution network but also to interrupt the circulation of fluid between the supply line and the return line. The flow blocking condition allows installation and maintenance operations of the user 4 to be carried out.

The bypass valve device has a bypass condition, in which the passage of fluid through the supply conduit 2 and the return conduit 3 is prevented. The passage of fluid through the bypass channel 8 is allowed in the bypass condition.

In detail, in the bypass condition of the valve device 1:
- the supply shutter 10 is placed in the closed operating condition,
- the bypass shutter 9 is placed in the open operating condition,
- the return shutter 7 is placed in the second operating condition.

The bypass condition is advantageously usable in cases in which it is desired to isolate the user 4 from the fluid distribution network without interrupting the circulation of fluid between the supply line and the return line. In the bypass condition, the user is isolated from the supply line 101 and from the return line 102, and the valve device does not send or receive fluid to/from the same user 4. The bypass condition allows washing operations of the system or of the fluid distribution network to be carried out without supplying the user 4. For example, when the device is arranged in the bypass condition it is possible to eliminate any impurities (for example dust) from the system, from the supply line or return line without these impurities passing through the user.

The bypass valve device 1 has a venting condition, in which the passage of fluid through the supply conduit 2 and the passage of fluid from the user 4 to the vent channel 6 are allowed. In particular, in the venting condition, the passage of fluid through the bypass channel 8 is prevented.

In detail, in the venting condition of the valve device 1:
- the supply shutter 10 is placed in the open operating condition,
- the bypass shutter 9 is placed in the closed operating condition,
- the return shutter 7 is placed in the second operating condition.

The venting condition is usable when it is desired to remove air from inside the circuit, preferably from the return conduit 3 and/or from the user 4, without this reaching the return line 102. In particular, by supplying the fluid to the user 4, any air present in the supply conduit 2 and/or in the user 4 is pushed into the return conduit 3 towards the vent channel 6 to be released into the environment surrounding the valve device 1.

The bypass valve device 1 has an operating condition, in which the passage of fluid through the supply conduit 2 and the return conduit 3 is allowed. In particular, in the operating condition, the passage of fluid through the bypass channel 8 is prevented. In detail, in the operating condition of the valve device 1:
- the supply shutter 10 is placed in the open operating condition,
- the bypass shutter 9 is placed in the closed operating condition,
- the return shutter 7 is placed in the first operating condition.

The operating condition is usable when it is desired that the user 4 receive the fluid from the supply line 101 and send the same fluid to the return line 102.

The present invention also relates to a hydraulic system 100 which comprises the valve device 1 according to any one of the embodiments described herein. The hydraulic system 100 may be a portion of a heating or air-conditioning system.

The hydraulic system 100 comprises at least the fluid supply line 101 and at least the return line 102 of said fluid. The supply line 101 is connected upstream of the supply conduit 2 of the bypass valve device 1 and the return line 102 is connected downstream of the return conduit 3 of the bypass valve device 1.

The hydraulic system 100 comprises the user 4, wherein the inlet 4a of the user 4 is connected downstream of the supply conduit 2 to receive the fluid and the outlet 4b is connected upstream of the return conduit 3 to send the fluid leaving the user 4 to the same bypass valve device 1.

According to an aspect, the hydraulic system 100 may comprise a plurality of bypass valve devices 1 and a plurality of users 4, wherein each bypass valve device 1 is associated and connected to a respective user 4.

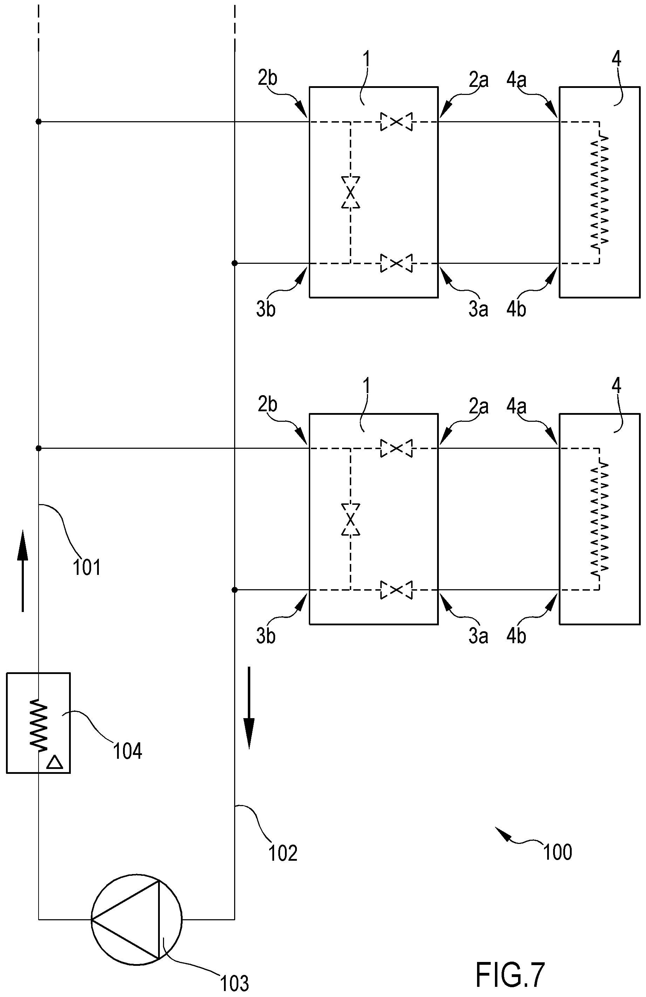

In particular, the users 4 are arranged in parallel with each other as, for example, illustrated in figure 7. Each user 4 exchanges fluid through the respective bypass valve device 1 directly with the distribution network. In other words, there is no passage of fluid directly between two users 4.

In an embodiment, the hydraulic system 100 comprises pumping means 103, for example a pump, in fluid communication with the supply line 101 and the return line 102. The pumping means 103 are arranged downstream of the return line 102 and upstream of the supply line 101. The pumping means 103 are adapted to receive fluid from one or more users through the return line 102 and supply fluid to said users through the supply line 101.

The hydraulic system 100 also comprises a heater 104, for example a boiler, a water heater or a boiler, arranged upstream of the supply line 101. The heater 104 is configured to receive fluid from the return line 102 at a temperature and supply the fluid at a higher temperature to the supply line 101. In particular, the heater 104 is arranged downstream of the pumping means 103.

The present invention also relates to the method of use of the bypass valve device 1 according to the present description. The method of use may provide one or more among connecting the bypass valve device to the fluid distribution network, connecting the user to the valve device, maintaining the user or removing air from the circuit.

The method comprises the step of connecting the bypass valve device 1 to a fluid distribution network or system. In particular, the method comprises the step of connecting the supply line 101 and the return line 102 respectively upstream of the supply conduit 2 and downstream of the return conduit 3 of the bypass valve device 1. More in detail, the step of connecting the bypass valve device 1 to the supply line 101 and to the return line 102 comprises connecting the inlet mouth 2b of the supply conduit 2 to the supply line 101 to receive fluid from the distribution network and connecting the outlet mouth 3b of the return conduit 3 to the return line 102. The step of connecting the inlet mouth 2b of the supply conduit 2 to the supply line 101 may comprise screwing a terminal portion of the supply line 101, for example defined by an optionally flexible tubular element, to the inlet mouth 2b. The step of connecting the outlet mouth 3b to the return line 102 may comprise screwing a terminal portion of the return line 102, for example defined by an optionally flexible tubular element, to the outlet mouth 3b.

The method comprises the step of placing the bypass valve device 1 in the bypass condition or in the flow blocking condition and the step of connecting the user 4 to the valve device 1. The user 4 is connected to the valve device 1 by connecting the inlet 4a downstream of the supply conduit 2 and the outlet 4b upstream of the return conduit 3.

In particular, the step of connecting the user 4 to the valve device 1 is performed when the bypass valve device 1 is arranged in the flow blocking condition or in the bypass condition.

Preferably, the bypass valve device 1 is placed in the flow blocking condition before connecting the user 4 to the valve device 1.

The bypass valve device 1 may be placed in the bypass condition to carry out washing of the system so as to remove impurities from the supply line 101 and from the return line 102 without these entering the user 4 or coming into contact with components of the user 4.

In particular, connecting the user 4 to the valve device 1 comprises connecting the inlet 4a of the user 4 to the supply terminal 2a of the supply conduit 2 and connecting the outlet 4b of the user 4 to the fluid receiving terminal 3a of the return conduit 3. In an embodiment, the inlet 4a of the user 4 is connected to the supply terminal 2a, directly or with the interposition of a tubular element for example flexible, by means of the connection portion 22a of the second insert 22. The outlet 4b of the user 4 is in turn connected, directly or with the interposition of a tubular element for example flexible, to the fluid receiving terminal 3a by means of the connection portion 21a of the first insert 21.

According to an aspect, the step of connecting the inlet 4a of the user 4 to the supply terminal 2a comprises screwing the supply terminal 2a to the user 4 or to the respective tubular element. The step of connecting the outlet 4b of the user 4 to the fluid receiving terminal 3a comprises screwing the receiving terminal 3a to the user 4 or to the respective tubular element.

The step of placing the bypass valve device 1 in the flow blocking condition comprises the steps of:
- placing the supply shutter 10 in the closed operating condition,
- placing the bypass shutter 9 in the closed operating condition,
- placing the return shutter 7 in the second operating condition.

According to an aspect, the step of placing the bypass valve device 1 in the bypass condition comprises the steps of:
- placing the supply shutter 10 in the closed operating condition,
- placing the bypass shutter 9 in the open operating condition,
- placing the return shutter 7 in the second operating condition.

The method further comprises the step of placing the bypass valve device 1 in the venting condition and the step of supplying fluid to the user 4 through the supply conduit 2.

In particular, the step of placing the bypass valve device 1 in the venting condition comprises the steps of:
- placing the supply shutter 10 in the open operating condition,
- placing the bypass shutter 9 in the closed operating condition,
- placing the return shutter 7 in the second operating condition so as to allow air removal through the vent channel 6.

The method may comprise the step of placing the bypass valve device 1 in the operating condition and the step of receiving the fluid from the user 4 and supplying the fluid to the fluid return line 102 through the return conduit 3.

In detail, the step of placing the bypass valve device 1 in the operating condition comprises the steps of:
- placing the supply shutter 10 in the open operating condition,
- placing the bypass shutter 9 in the closed operating condition,
- placing the return shutter 7 in the first operating condition.

The step of placing the return shutter 7 in the first operating condition or in the second operating condition comprises acting on the respective first actuating member 27. In particular, the step of placing the return shutter 7 in the first operating condition or in the second operating condition comprises rotating, for example by 90°, the handle 27a connected to the return shutter 7.

The step of placing the bypass shutter 9 in the respective open operating condition or in the respective closed operating condition comprises acting on the respective second actuating member 28. In particular, the step of placing the bypass shutter 9 in the open operating condition or in the closed operating condition comprises rotating, for example by 90°, the handle 28a of the second actuating member 28 connected to the bypass shutter 9.

The step of placing the supply shutter 10 in the respective open operating condition or in the respective closed operating condition comprises acting on the respective actuating member 29. In particular, the step of placing the supply shutter 10 in the respective open operating condition or in the respective closed operating condition comprises rotating, for example by 90°, the handle 29a of the third actuating member 29 connected to the supply shutter 10.

The present invention lends itself to numerous variants which may be implemented by a person skilled in the art and which all fall within the scope of protection defined by the following claims.

### LEGENDA

- 1: Bypass valve device
- 2: Supply conduit
- 2b: Fluid inlet port
- 2a: Fluid supply terminal
- 3: Return conduit
- 3a: Fluid receiving terminal
- 3b: Outlet mouth
- 4: User
- 4a: User inlet
- 4b: User outlet
- 6: Vent channel
- 6a: Vent channel end
- 7: Return shutter
- 7': First channel
- 7": Second channel
- 8: Bypass channel
- 9: Bypass shutter
- 10: Supply shutter
- 7a, 9a, 10a: Receiving seats
- 11: Tubular collar
- 12: Vent valve
- 13: Tubular valve body
- 13a: First end of the tubular valve body
- 13b: Second end of the tubular valve body
- 14: Internal chamber
- 15: Venting orifice
- 16: Wall of the tubular valve body
- 17: Control member
- 18: Control portion
- 19: Closing portion
- 20: Stem
- 21: First insert
- 22: Second insert
- 21a, 22a: Connecting portion
- 23: Third insert
- 24: Access
- 25: Closing element
- 26: Main body
- 27, 28, 29: Actuating means
- 27a, 28a, 29a: Handles
- 30: Interspace
- 31: Sealing element
- 32: Access portions
- 70: Rotatable element
- 71, 73: Openings of the first channel
- 72: Opening of the second channel
- 100: Hydraulic system
- 101: Supply line
- 102: Return line
- 103: Pumping means
- 104: Heater

## Claims

1. Bypass valve device (1) comprising:
a supply conduit (2) configured to supply a fluid to a user (4),
a return conduit (3) configured to receive said fluid from the user (4),
a vent channel (6) connected to the return conduit (3),
a return shutter (7) operating at the return conduit (3) and switchable at least between:
a first operating condition, in which it is arranged to allow fluid passage through the return conduit (3),
a second operating condition, in which it is arranged to block fluid passage through the return conduit (3) and allow fluid passage from the user (4) to the vent channel (6).

2. Bypass valve device (1) according to the preceding claim, wherein the return shutter (7) comprises an element (70) rotatable about an axis and defining two mutually transverse channels (7', 7"), wherein said two channels (7', 7") of the return shutter (7) are configured to be placed in fluid communication with the vent channel (6), the return duct (3) and the user (4),
optionally wherein the two mutually transverse channels (7', 7") are orthogonal to each other,
more optionally wherein the rotatable element (70) is an element having at least one surface of revolution, or a spherical element or a quasi-spherical element or a cylindrical element or an ovoid element.

3. Bypass valve device (1) according to any one of the preceding claims, comprising:
a bypass channel (8) connected to the supply conduit (2) and to the return conduit (3) to place them in fluid communication with each other,
a bypass shutter (9) arranged at said bypass channel (8) and switchable at least between an open operating condition, in which it allows fluid passage from the supply conduit (2) to the return conduit (3), and a closed operating condition, in which it is arranged to block fluid communication between said conduits (2, 3).

4. Bypass valve device (1) according to the preceding claim, wherein the return conduit (3) extends between a fluid receiving terminal (3a), configured to be connected to the user (4), and an outlet port (3b), and wherein the vent channel (6) is connected to a section of the return conduit (3) extending between the fluid receiving terminal (3a) and the bypass channel (8), optionally wherein the vent channel (6) is configured to be positioned in use proximally to the user (4), and wherein the vent channel (6) extends transversely to the return conduit (3), preferably wherein the vent channel (6) extends away from the return conduit (3) being arranged alternatively either towards the supply conduit (2) or away from the supply conduit (2), more preferably wherein the vent channel (6) is arranged perpendicularly to the return conduit (3).

5. Bypass valve device (1) according to any of the preceding claims, wherein in the first operating condition, the return shutter (7) is arranged to allow fluid passage through the return conduit (3) and alternatively to:
block fluid passage from the user (4) to the vent channel (6), or
allow fluid passage from the user (4) to the vent channel (6), and
optionally wherein the return shutter (7) is a ball valve, preferably a three-way ball valve.

6. Bypass valve device (1) according to any of the preceding claims, comprising a supply shutter (10) operating at the supply conduit (2) and switchable between:
an open operating condition, in which it is arranged to allow fluid passage through the supply conduit (2), in particular allowing in use the supply of fluid to the user (4), and
a closed operating condition, in which it is arranged to block fluid passage through the supply conduit (2), in particular preventing in use the supply of fluid to the user (4), and
wherein said supply conduit (2) extends between a fluid inlet port (2b) and a fluid supply terminal (2a) configured to be connected to said user (4), said supply shutter (10) being arranged in a section of the supply conduit (2) extending between the fluid supply terminal (2a) and the bypass channel (8), optionally wherein said supply shutter (10) is configured to be positioned in use proximally to the user (4).

7. Bypass valve device (1) according to any of the preceding claims, wherein said vent channel (6) comprises a tubular collar (11) projecting from the return conduit (3), and wherein a vent valve (12) is engaged to the tubular collar (11), wherein said vent valve (12) is switchable between an open state, in which it is arranged to allow fluid passage between the vent channel (6) and an external environment, and a closed state, in which it is arranged to block fluid passage between the vent channel (6) and the external environment.

8. Bypass valve device (1) according to the preceding claim, wherein the vent valve (12) comprises:
a tubular valve body (13) having a first end (13a) engaged to the tubular collar (11), and a second end (13b), opposite to the first end (13a), wherein the tubular valve body (13) defines an internal chamber (14) and at least a venting orifice (15) passing through a wall (16), optionally a lateral wall, of the tubular valve body (13), and
a control member (17) fluid-tightly engaged at the second end (13b) of the tubular valve body (13) and having a control portion (18), projecting from the tubular valve body (13) and activatable by a user, and a closing portion (19), optionally connected to the control portion (18) by a stem (20) passing through the internal chamber (14) of the tubular valve body (13), said closing portion (19) being selectively configurable to operate as follows:
in the open state of the vent valve (12), to open the fluid passage through said vent channel (6) and said first end (13a) of the tubular valve body (13), allowing venting through the venting orifice (15),
in the closed state of the vent valve (12), to prevent fluid passage through said vent channel (6) and said first end (13a) of the tubular valve body (13), blocking venting through the venting orifice (15).

9. Bypass valve device (1) according to any of the preceding claims when combined with claims 3 and 6, wherein the return conduit (3), the supply conduit (2), and the bypass channel (8) define at least partially respective receiving seats (7a, 10a, 9a) configured to receive respectively the return shutter (7), the supply shutter (10), and the bypass shutter (9),
optionally wherein the receiving seat (7a) of the return shutter (7) and the return shutter (7) define an interspace (30) therebetween; wherein said interspace (30) is adapted to be in fluid communication with the user (4) and with the vent channel (6) and to allow the passage of fluid between the user (4) and said vent channel (6), more optionally wherein the interspace (30) is in fluid communication with the vent channel (6) in the first operating condition and in the second operating condition of the return shutter (7).

10. Bypass valve device (1) according to any of the preceding claims when combined with claims 4 and 6, comprising:
a first insert (21) connected, optionally removably, to the return conduit (3) to at least partially define said fluid receiving terminal (3a),
a second insert (22) connected, optionally removably, to the supply conduit (2) to at least partially define said fluid supply terminal (2a), and
wherein the first insert (21) and/or the second insert (22) each have a connecting portion (21a, 22a) configured for removable coupling with the user (4), optionally wherein said connecting portion (21a, 22a) is threaded,
optionally wherein:
the first insert (21) is connected to the return conduit (3) at the respective seat (7a) to define said seat and to constrain the return shutter (7) within it;
the second insert (22) is connected to the supply conduit (2) at the respective seat (10a) to define said seat and to constrain the supply shutter (10) within it, and wherein:
the first insert (21) is engageable to the return conduit (3) to allow insertion and optionally removal of the return shutter (7) into/from the respective seat (7a),
the second insert (22) is engageable to the supply conduit (2) to allow insertion and optionally removal of the supply shutter (10) into/from the respective seat (10a).

11. Bypass valve device (1) according to any of the preceding claims when combined with claims 3 and 9, comprising a third insert (23) connected, optionally removably, to the bypass channel (8) to define the respective seat (9a) and constrain the bypass shutter (9) within it, the third insert (23) being engageable to the bypass channel (8) to allow insertion and optionally removal of the bypass shutter (9) into/from the respective seat (9a), and
wherein the bypass valve device (1) comprises:
an access (24) at the return conduit (3) or the supply conduit (2) associated with the bypass channel (8) and configured to allow insertion and optionally removal of the third insert (23) and thus of the bypass shutter (9) into/from the respective seat (9a),
a closing element (25) engageable to said access (24) to close it.

12. Bypass valve device (1) according to any of the preceding claims, wherein the supply conduit (2), the return conduit (3), the vent channel (6), and optionally the bypass channel (8), are manufactured as a single piece, or
wherein the bypass valve device (1) comprises a main body (26) couplable to one or more of said first insert (21), second insert (22), third insert (23), closing element (25); said main body (26) defining at least partially said supply conduit (2), the return conduit (3), the vent channel (6), and optionally the bypass channel (8).

13. Hydraulic system (100) comprising:
at least one supply line (101) of a fluid,
at least one return line (102) of said fluid,
a bypass valve device (1) according to any of the preceding claims, wherein the supply line (101) is connected upstream of the supply conduit (2) of the bypass valve device (1) and wherein the return line (102) is connected downstream of the return conduit (3) of the bypass valve device (1),
a user (4), preferably a heat exchanger, comprising an inlet (4a) and an outlet (4b) in fluid communication with each other, said inlet (4a) being connected downstream of the supply conduit (2) of said bypass valve device (1) to receive said fluid, said outlet (4b) being connected upstream of the return conduit (3) of said bypass valve device (1) to send to the same bypass valve device (1) the fluid exiting from the user (4).

14. Method of using the bypass valve device (1) according to any of claims 1 to 12 in a fluid distribution system, comprising the steps of:
- placing said bypass valve device (1) in a bypass condition, in which fluid passage through the supply conduit (2) and the return conduit (3) is blocked and allowed through the bypass channel (8), or in a flow blocking condition, in which fluid passage through the supply conduit (2), the return conduit (3), and the bypass channel (8) is blocked,
- connecting a supply line (101) and a return line (102) of said fluid distribution system respectively upstream of the supply conduit (2) and downstream of the return conduit (3) of the bypass valve device (1),
- providing a user (4) comprising an inlet (4a) and an outlet (4b) in fluid communication with each other,
- connecting the user (4) to the valve device (1) by connecting the inlet (4a) of the user (4) downstream of the supply conduit (2) and the outlet (4b) of the user (4) upstream of the return conduit (3),
wherein the step of connecting the user (4) to the valve device (1) is carried out when the bypass valve device (1) is in the bypass condition or in the flow blocking condition.

15. Method according to the preceding claim, comprising the steps of:
- placing the bypass valve device (1) in a venting condition, in which fluid passage through the supply conduit (2) and fluid passage from the user (4) to the vent channel (6) are allowed and optionally fluid passage through the bypass channel (8) is blocked,
- supplying fluid to the user (4) through the supply conduit (2),
wherein placing the bypass valve device (1) in the venting condition includes placing the return shutter (7) in the second operating condition so as to allow removal of air through said vent channel (6), and/or
the method comprises the steps of:
- placing the bypass valve device (1) in an operating condition, in which fluid passage through the supply conduit (2) and the return conduit (3) is allowed and optionally fluid passage through the bypass channel (8) is blocked,
- receiving fluid from the user (4) and supplying said fluid to the return line (102) through the return conduit (3), and
wherein placing the bypass valve device (1) in the operating condition includes placing the return shutter (7) in the first operating condition and the bypass shutter (9) in the closed operating condition.
